# EUROPÄISCHE PATENTSCHRIFT

(11) **EP 2 618 962 B1**
(45) Veröffentlichungstag und Bekanntmachung des Hinweises auf die Patenterteilung: **20.08.2014**
(21) Anmeldenummer: 11810781.2
(22) Anmeldetag: 20.09.2011
(51) Int. Cl.: B23Q 7/00, B23Q 7/04, B23Q 7/05, B23Q 7/14

(54) **FERTIGUNGSZELLE MIT EINER WERKTEIL-TRANSFEREINRICHTUNG UND TRANSPORTEINRICHTUNG FÜR WERKTEILE UND TEILETRÄGER**
PRODUCTION CELL WITH A WORKPIECE TRANSFER DEVICE, AND TRANSPORT DEVICE FOR WORKPIECES AND PART CARRIERS
CELLULE DE FABRICATION COMPRENANT UN DISPOSITIF DE TRANSFERT DE PIÈCES, ET DISPOSITIF DE TRANSPORT POUR PIÈCES ET PORTE-PIÈCES

(30) Priorität: 21.09.2010 AT 15702010
(43) Veröffentlichungstag der Anmeldung: 31.07.2013
(73) Patentinhaber: TRUMPF Maschinen Austria GmbH & Co. KG., 4061 Pasching (AT)
(72) Erfinder: PLAKOLM, Jürgen, A-4175 Herzogsdorf (AT)
(74) Vertreter: Burger, Hannes
(86) Internationale Anmeldenummer: PCT/AT2011/050011
(87) Internationale Veröffentlichungsnummer: WO 2012/037592

(56) Entgegenhaltungen:
- EP-A1- 2 116 325
- DE-A1- 3 219 394
- DE-B3-102008 009 090
- JP-A- 59 082 230

## Beschreibung

Die Erfindung betrifft eine Fertigungszelle wie sie im Oberbegriff des Anspruches 1 beschrieben ist (DE 10 2008 00 9090 B3).

Bei einer Serienfertigung von Werkteilen an Fertigungseinrichtungen, bei der die Anforderungen an teure Fertigungseinrichtungen in Bezug auf die Umschlagleistung bzw. Zykluszeiten zur Kostenreduktion vielfach sehr hoch sind, wird oft ein automatisierter Teiletransfer für die Bedienung der Fertigungsmaschinen durch Werkteil- Handhabungseinrichtungen, insbesondere Roboter zum Einsatz gebracht. Dies bedingt aber auch eine entsprechende Teilebereitstellung im Umfeld des Roboters und auch deren Abtransport, wobei vielfach die Werkteile auf Teileträgern gelagert sind die manuell mit Transportmitteln, z.B. Gabelhubwagen, Stapler etc. transportiert werden. Aus Gründen der Sicherheit des Arbeitspersonals sind für derartige Transporte zumindest die Handhabungseinrichtungen außer Betrieb zu setzen und bedingt dies auch vielfach einen Stillstand an der Fertigungsmaschine wodurch die Produktionskosten erhöhende Stillstandszeiten entstehen.

Aufgabe der Erfindung ist es, eine Fertigungszelle zur automatisierten Bearbeitung von Werkteilen mit einer Fertigungseinrichtung und einer Teile- Handhabungsvorrichtung zu schaffen bei der durch eine Teilezufuhr und -abfuhr bedingte Stillstandszeiten vermieden werden und kurze Teile- Transferwege für die Teilehandhabung zur Vermeidung unproduktiver Nebenzeiten erreicht werden.

Diese Aufgabe der Erfindung wird durch die im Anspruch 1 wiedergegebenen Merkmale erreicht. Der Vorteil dabei ist, dass bedienungsbedingte Störungen des in der Fertigungszelle ablaufenden Fertigungsprozess durch eine automatisierte Werkteilzufuhr und -abfuhr aus der Fertigungszelle reduziert werden und eine hohe Sicherheit für das Bedienungspersonal erreicht wird.

Durch diese Ausbildung ist der Platzbedarf für die Werkteil-Transfereinrichtung in der Fertigungszelle gering und auch die Transferwege für den Werkteiltransfer werden durch die Werkteil-Handhabungsvorrichtung gering gehalten und damit Nebenzeiten reduziert.

Außerdem ist eine Aufstellung der gesamten Werkteil-Transfereinrichtung ohne weitere bauliche Maßnahmen auf einer Betriebsfläche gewährleistet.

Gemäß der in den Ansprüchen 2 bis 5 beschriebenen, vorteilhaften Ausbildungen wird eine kostengünstige und sowohl für eine Paletten- wie auch Behälterförderung geeignete Fördereinrichtung und kurze Transferwege für die Handhabungsvorrichtung erreicht und können auch Werkteile unmittelbar auf Bandförderer aufgelegt und damit zur Vermeidung von Oberflächenbeschädigungen, die bei einem Schüttguttransport auftreten können, transportiert werden.

Vorteilhaft sind aber auch die Ausbildungen nach den Ansprüchen 6 bis 9, wodurch eine sehr universelle und bedarfsangepasste Konzeption einer Werkteil- Transfereinrichtung erreicht wird und bei der eine hohe Umschlagleistung unter Berücksichtigung der Werkteileigenschaften und Anforderungen erzielt wird.

Durch die in den Ansprüchen 10 und 11 beschriebenen, vorteilhaften Weiterbildungen wird ein wahlweise bzw. dem Bedarf angepasster reversibel gestaltbarer Umlauf der Werkteilträger durch die Förderrichtung erreicht.

In den Ansprüchen 12 und 13 werden weitere vorteilhafte Ausbildungen beschrieben, durch die eine unbeabsichtigte bzw. unerlaubte Manipulation weitestgehend unterbunden wird.

Die im Anspruch 14 beschriebene, vorteilhafte Ausbildung gewährleistet zusätzliche Speicherplätze durch welche die Zeitdauer des automatisierten Ablaufes zwischen erforderliche Bedienungspausen verlängert und damit die Produktivität erhöht wird.

Gemäß der im Anspruch 15 beschriebenen, vorteilhaften Weiterbildung ist ein universeller Einsatz von Teileträgern in unterschiedlichen Ausbildungen, wie Paletten, Behälter und oder Tablare, ohne oder mit Aufsatzrahmen möglich.

Die in den Ansprüchen 16 bis 18 beschriebenen, vorteilhaften Ausbildungen gewährleisten einen störungssicheren Betrieb sowie eine permanente Überwachung der ordnungsgemäßen Funktion der Werkteil-Transfereinrichtung und ein rasches Eingreifen sowie kurzfristige Durchführung von Maßnahmen bei etwaigen Störungen.

Durch die Ausbildung nach Anspruch 1 wird Zykluszeit beim Werkteil-Transfer durch die Werkteil-Handhabungseinrichtung eingespart.

Zum besseren Verständnis der Erfindung wird diese anhand der nachfolgenden Figuren näher erläutert.

Es zeigen jeweils in stark schematisch vereinfachter Darstellung:
- Fig. 1: eine erfindungsgemäße Fertigungszelle mit einem durch eine Werkteil- Handhabungseinrichtung bedienbare Fertigungseinrichtung und mit einer Werkteil-Transfereinrichtung, in vereinfachter Darstellung;
- Fig. 2: eine erfindungsgemäße Ausbildung der Werkteil-Transfereinrichtung in Ansicht nach Linien II-II in Fig. 1, in vereinfachter Darstellung;
- Fig. 3: eine weitere Ausbildung der Werkteil-Transfereinrichtung in Ansicht, in vereinfachter Darstellung;
- Fig. 4: eine andere Ausbildung der Werkteil-Transfereinrichtung in Ansicht, in vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

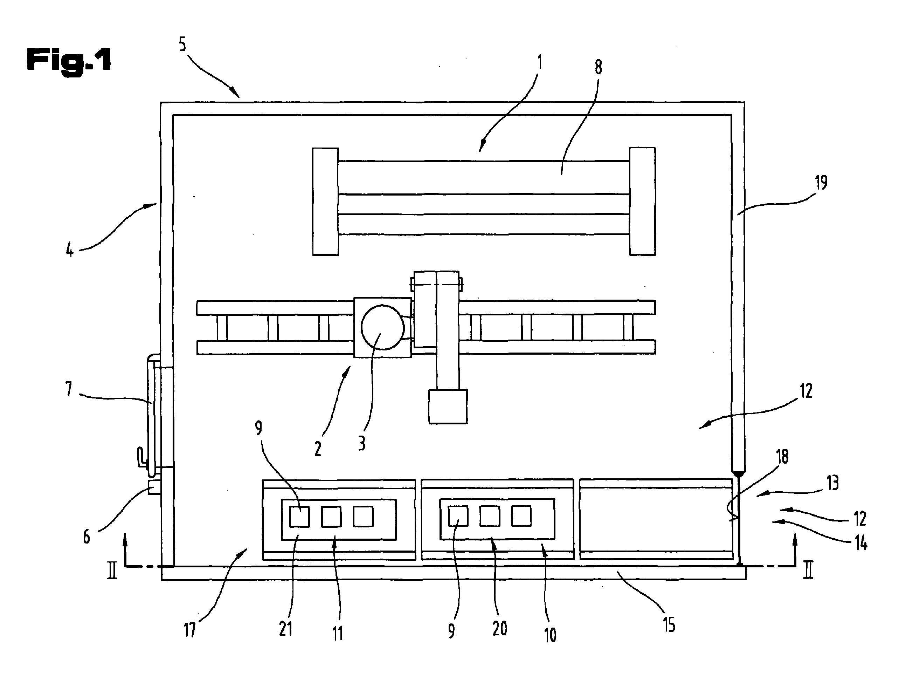

In der Fig. 1 ist eine Fertigungseinrichtung 1 und eine Händhabungseinrichtung 2, zum Beispiel ein Mehrachsroboter 3, innerhalb einer von einem Schutzzaun 4 umgrenzten Fertigungszelle 5 gezeigt. Die Fertigungszelle 5 ist über eine im Schutzzaun 4 vorgesehene, mit gegen unbefugten Zutritt mit einer Sicherheitseinrichtung 6 versehenen Tür 7 nur für eine befugte Bedienperson zugänglich.

Bei der Fertigungseinrichtung 1 handelt es sich beispielsweise um eine Biegepresse 8 zur Herstellung biegegeformter Werkteile 9, welche von der Handhabungseinrichtung 2, z.B. dem Mehrachsroboter 3, an einer Bereitstellposition 10 aufgenommen und der Biegepresse 8 zur Vornahme eines Biegevorganges zugeführt werden und nach dem erfolgten Umformvorgang an einer Abgabeposition 11 abgegeben werden.

Für eine Zu- und Abfuhr der Werkteile 9 in die bzw. aus der Fertigungszelle 5 ist eine Werkteil-Transfervorrichtung 12 vorgesehen die einen automatisierten Werkteilumschlag von einem die Fertigungszelle 5 umgebenden Betriebsraum oder einer Betriebsfläche in die bzw. aus der Fertigungszelle 5 gewährleistet.

Die erfindungsgemäße Werkteil-Transfereinrichtung 12 ist nach dem gezeigten Ausführungsbeispiel durch eine in zwei übereinander liegenden Förderniveaus Förderwege 13, 14 ausbildende, längs einer Seitenwand 15 des Schutzzaunes 4 erstreckende, Fördereinrichtung 16 mit einer im Anschluss daran angeordneten eine Fördereinrichtung aufweisenden in vertikaler Richtung verstellbaren Stelleinrichtung 17, wie noch später beschrieben, gebildet.

Diese zweietagige Ausbildung der Fördereinrichtung 16 gewährleistet einen geringen Platzbedarf in der Fertigungszelle 5 und damit auch für diese insgesamt bei hoher Umschlagleistung an Werkteilen 9 und damit eine hohe Produktivität durch geringe Nebenzeiten für das Teilehandling infolge kurzer Transferwege.

Die erfindungsgemäße Werkteil-Transfereinrichtung 12 ist über eine Ein- und Ausgangsschleuse 18, die in einer Querseitenwand 19 des Schutzzaunes 4 angeordnet ist, für einen Werkteiltransfer wie bereits weiter oben beschrieben, bedienbar. Der Werkteiltransfer erfolgt nach diesem Beispiel mittels Teileträger 20, z.B. Paletten mit oder ohne Aufsatzrahmen, Behälter, Tablare, Werkteile- Sortier- oder Positionierboxen etc. die entweder im befüllten oder leeren Zustand an die Bereitstellposition 10 zugefördert und im befüllten oder leeren Zustand von der Abgabeposition abgefördert werden.

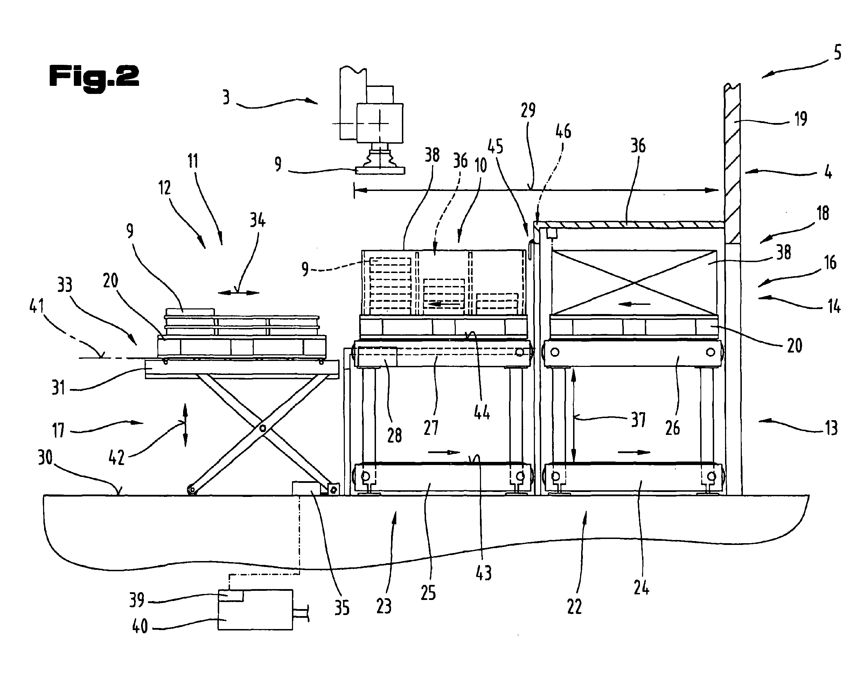

In der Fig. 2 ist eine mögliche Ausbildung der Werkteil-Transfereinrichtung 12 mit der den ersten und den zweiten Förderweg 13, 14 ausbildenden, zweietagigen Fördereinrichtung 16 und der im Anschluss daran angeordneten Stelleinrichtung 17 gezeigt und wird an Hand dieser Figur auch eine mögliche Zu- und Abfuhr der Werkteile 9 in die und aus der Fertigungszelle 5 mit der Werkteil-Transfereinrichtung 12 und Teileträgern 20 beschrieben. In diesem Ausführungsbeispiel erfolgt beispielsweise die Zuförderung der Werkteile 9 über den Förderweg 14 an die Bereitstellposition 10 und über den Förderweg 13 die Abförderung von der Abgabeposition 11.

Die Fördereinrichtung 16 ist bevorzugt für einen getakteten Transport eines Teileträgers 20, zum Beispiel eine Palette 21, sowohl für den ersten Förderweg 13 wie auch zweiten Förderweg 14 durch jeweils zwei unmittelbar aneinander grenzende und jeweils eine erste und eine zweite Förderstation 22, 23 ausbildende Fördermittel 24, 25, 26, 27, die jeweils über ein eigenes Antriebsmittel 28, z.B. Elektromotor verfügen, gebildet.

Jeder Förderweg 13, 14 ist für eine gesamte von der Ein- und Ausgangsschleuse 18 des Schutzzaunes 4 in die Fertigungszelle 5 reichende Förderlänge 29, für beispielsweise der zweifachen Länge einer EURO-Palette von 1.200 mm, d.h. für insgesamt ca. 2.400 mm ausgelegt.

Im Anschluss an die den ersten Förderweg 13 ausbildenden Fördermittel 24, 25, die unmittelbar auf einer Aufstandsfläche 30 befestigt sind, ist die, ebenfalls für das Format einer EURO-Palette ausgelegte Stelleinrichtung 17, zum Beispiel ein Hubtisch 31, z.B. Lift 32. Scherenhubtisch etc. für den Vertikaltransport der Teileträger 20 zwischen den in einem vertikalem Abstand überdeckenden Förderwegen 13, 14 angeordnet.

Am Hubtisch 31 oder Lift 32 ist ein Förderer 33 angeordnet mittels dem die Teileträger 20 von den angrenzenden Fördermitteln 25, 27 übernommen bzw. an diese abgegeben werden.

Grundsätzlich ist es möglich, die Fördermittel 24, 25 für den ersten Förderweg 13 und die Fördermittel 26, 27 für den zweiten Förderweg 14 wie anhand der Pfeile in der Fig. 2 dargestellt, für jeweils nur eine Förderrichtung vorzusehen, z. B. den oberen Förderweg 14 für den Zutransport der Teileträger 20 bzw. Werkteile 9 in die Fertigungszelle 5 und den unteren Förderweg 14 für den Abtransport der Teileträger 20 bzw. der Werkteile 9 aus der Fertigungszelle 5 vorzusehen.

Vorteilhaft ist allerdings zur Erhöhung der Fördervarianten und damit der Flexibilität der Werkteil- Transfereinrichtung 12 die Antriebsmittel 28 bzw. die Ansteuerung der Antriebsmittel 28 für reversible Förderrichtungen auszubilden, wie es grundsätzlich für den am Hubtisch 31 angeordneten Förderer 33 - gemäß Doppelpfeil 34 - für das Übernehmen und Abgeben der Teileträger 20 von dem bzw. auf dem angrenzenden Förderer 25, 27 erforderlich ist.

Durch die Aufteilung der Fördermittel 24 bis 27 in die Förderstationen 22, 23 wird die Bereitstellkapazität der Werkteil- Transfereinrichtung 12 für den Zu- und Abtransport der Teileträger 20 in die bzw. aus der Fertigungszelle 5 und damit des Teileumschlages ebenfalls erhöht.

Für die Fördermittel 24 bis 27 und dem Förderer 33 kommen sowohl Bandförderer, Riemenförderer, Mehrspurförderer, Rollenförderer, die sämtlich für die Beförderung aller gängigen Waren- oder Teileträger wie Paletten, Behälter, Tablare etc. geeignet sind, und für einen sicheren Langzeitbetrieb aus der Fördertechnik hinlänglich bekannt sind, wahlweise zur Anwendung.

Nach einer bevorzugten Ausbildung sind die Fördermittel 24 bis 27 durch Bandförderer und der Förderer 33 der Stelleinrichtung 17 durch einen Rollenförderer gebildet.

Wie weiter der Fig. 2 zu entnehmen, ist im Bereich der an die Ein- und Ausgangsschleuse 18 anschließende erste Förderstation 22 eine tunnelartige Abschottung durch Trenn- und Deckelemente 36 vorgesehen, durch die ein unzulässiges Eindringen einer unbefugten Person in die Fertigungszelle 5 verhindert bzw. zumindest erschwert wird. Selbstverständlich ist es auch möglich weitere Bereiche der Werkteil- Transfereinrichtung 12, soweit diese das Teilehandling durch die Handhabungseinrichtung 2 nicht behindern, durch derartige Trenn- und Deckelemente 36 - wie in unterbrochenen Linien gezeigt - abzusichern.

Bei der Anordnung der übereinander verlaufenden Fördermitteln 24 bis 27 und etwaiger Trenn- und Deckelemente 36, sowie der Ein- und Ausgangsschleuse 18 ist eine freie Förderhöhe 37, die bevorzugt zwischen 800 und 1000 mm beträgt, zum Beispiel für die Förderung von mit Aufsatzrahmen 38 versehenen Teileträgern 20 vorgesehen.

Die beispielsweise durch den Hubtisch 31 gebildete Stelleinrichtung 17 ist bevorzugt mit einer Hubsteuerung 39 einer die gesamte Werkteil-Transfereinrichtung 12 steuernden, übergeordneten Steuereinrichtung 40 verbunden, die es ermöglicht, eine durch das Fördermittel 33 des Hubtisches 31 gebildete Förderebene 41 in der Vertikalrichtung - gemäß Doppelpfeil 42-in vorgebbaren Höhenlagen zwischen einer Förderebene 43 des unteren Förderweges 13 und einer Förderebene 44 des oberen Förderweges 14 zu regeln.

Damit ist es beispielsweise möglich - wie in der Fig. 2 gezeigt - ausgehend von der oberen Förderebne 41 auf einem auf dem Förderer 33 vorbereiteten Teileträger 20 fertig geformte Werkteile 9 mit dem Roboter 3 lagenweise auf dem Teileträger 20 vereinzelt abzulegen, z.B. für empfindliche Werkteile, die nicht als Schüttware zu behandeln sind.

Sobald eine Lage fertig abgelegt ist; wird beispielsweise mit dem Roboter 3 eine Kartontrennlage auf die Werkteile 9 aufgelegt auf die eine weitere Lage der Werkteile 9 aufgelegt.

Nach jeder Lage wird das Niveau der Stelleinrichtung 17 mit dem Förderer 33 um die Höhe einer Lage abgesenkt, wodurch für die Ablage der Werkteile 9 unabhängig von der Teilelage, durch das lagenweise Absenken des Hubtisches 31, auf gleich bleibendem Höhenniveau erfolgt. Damit wird eine gleich bleibende Zykluszeit für den Transfervorgang und gleichbleibender Steuerungsablauf für die Handhabungseinrichtung 2 erreicht.

Wie der Fig. 2 auch zu entnehmen ist, sind die für die Bearbeitung und Aufnahme durch den Roboter 3 auf dem oberen Förderweg 14 in der Förderstation 23 bereitgestellten Werkteile 9 auf bzw. in einem Teileträger 20 in sog. Positionierschächten vorpositioniert gestapelt.

Der Abtransport des mit den bearbeiteten Werkteilen 9 lagenweise befüllten Teileträgers 20 erfolgt nach dem Erreichen der Förderebene 43 über den unteren Förderweg 13 in die Förderstation 22 von wo durch die Ein- und Ausgangsschleuse 18 der befüllte Teileträger 20, z.B. mittels eines Staplers oder einer Transportplattform aus der Fertigungszelle 5 abtransportiert werden kann ohne den weiteren Betrieb der Fertigungseinrichtung bzw. des Roboters 3 zu unterbrechen..

Nach einer bevorzugten Ausbildung der Werkteil- Transfereinrichtung 12 sind beispielsweise im Bereich der Ein- und Ausgangsschleuse 18 und/oder zwischen den Förderstationen 22, 23 und/oder zwischen der Förderstation 23 und der Stelleinrichtung 17 Steuer- und Erfassungsmittel 45, z.B. Lichtschranken 46, oder Näherungssensoren 47vorgesehen. Diese sind mit der Steuereinrichtung 40 kommunikationsverbunden und wird mit Steuerinformationen aus der Hubsteuerung 39 der Stelleinrichtung 17 eine Zustandsüberwachung und Steuerung für einen optimierten und sicheren Betrieb der Werkteil- Transfereinrichtung 12 erreicht.

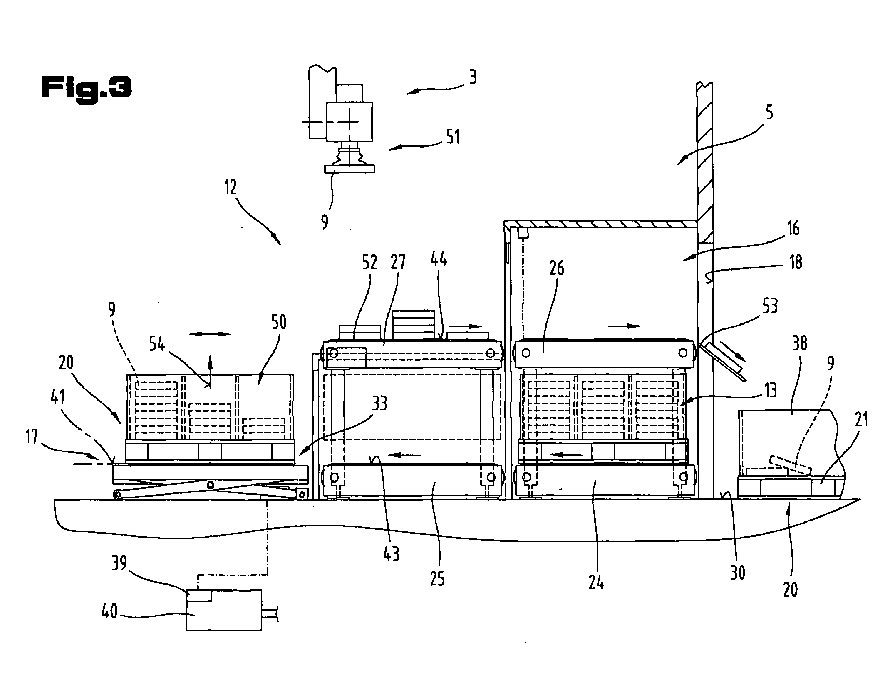

In der Fig. 3 ist die Fertigungszelle 5 mit der in dieser angeordneten und im Wesentlichen bereits vorhergehend beschriebenen Werkteil- Transfereinrichtung 12 gezeigt und nachfolgend eine weitere mögliche Variante der Zu- und Abfuhr der Werkteile 9 in die bzw. aus der Fertigungszelle 5 beschrieben.

Nach diesem Ausführungsbeispiel ist die Förderrichtung der Fördermittel 24, 25, 26, 27 der Fördereinrichtung 16 gegenüber dem vorhergehend beschriebenen Ausführungsbeispiel in entgegengesetzter Richtung, wie anhand der Pfeile zu entnehmen, vorgesehen.

Die zur Bearbeitung vorgesehenen Werkteile 9 sind in sogenannten Entnahmeschächten 50 eines Teileträgers 20, für eine Entnahme durch eine Greifeinrichtung 51 des Roboters 3 vorpositioniert.

Der Werkteilträger 20 mit den zu bearbeitenden Werkteilen 9 wird auf dem unteren Förderweg 13 in Richtung des Hubtisches 31 gefördert und von diesem mittels des am Hubtisch 31 angeordneten Förderers 33 übernommen und damit in einer Bereitstellposition bereitgestellt. Dazu ist der Hubtisch 31 in seiner unteren Endstellung, bei der die Förderebene 41 des Förderers 33 mit der Förderebene 43 des unteren Förderweges 13 fluchtend ausgerichtet und steht somit der Werkteilträger 20 auf der Stelleinrichtung 17 für die Entnahme der Werkteile 9 in dieser Position bereit.

Nach Durchführung des Bearbeitungsvorganges auf der nicht weiter dargestellten Fertigungseinrichtung, übergibt der Roboter 3 den fertig bearbeiteten Werkteil 9 an die Fördereinrichtung 16, und nach dem gezeigten Ausführungsbeispiel wird der Werkteil 9 unmittelbar auf das Fördermittel 27, zum Beispiel auf ein Förderband 52 für den Abtransport aus der Fertigungszelle 5 durch die Fördermittel 26 und 27 aufgelegt.

Wie weiter dargestellt, ist beispielsweise außerhalb der Fertigungszelle 12 unmittelbar im Bereich der Ein- und Ausgangsschleuse 18 auf der Aufstandsfläche 30 eine den Aufsatzrahmen 38 aufweisende Palette 21 als Teileträger 20 abgestellt.

Die vom Fördermittel 26 abgeführten, bearbeiteten Werkteile 9 werden über eine Rutsche 53 auf den Teileträger 20 bzw. in den Aufsatzrahmen 38 abgeleitet und in dieser gesammelt.

Weiter sei noch darauf hingewiesen, dass durch eine taktweise Verstellung der Höhenlage der Förderebene 41 des Förderers 33 mittels der Stelleinrichtung 17, eine lagenweise Entnahme der Werkteile 9 in einer für die Greifeinrichtung 51 gleichbleibenden Höhenlage erreicht wird. Dies erfolgt durch Ansteuerung der Stelleinrichtung 17 mit der Hubsteuerung 39 der Steuereinrichtung 40, wonach der Teileträger 20 nach Entnahme einer Lage der Werkteile 9 jeweils um eine Lagenhöhe, in zur Aufstandsfläche 30 vertikalen Richtung - gemäß Pfeil 54 - nachjustiert wird.

Dadurch ergibt sich der Vorteil einer gleichbleibenden Positionierung für die Greifeinrichtung 51 - hinsichtlich der Greifhöhe und der Ablagehöhe zur Aufnahme und Abgabe des Werkteils und damit eine Vereinfachung der Ansteuerung und dem weiteren Vorteil der gleichbleibenden Transferwege.

Die direkte Ablage des bearbeiteten Werkteils 9 auf den Bandförderer ist weiters für oberflächenempfindliche Werkteile 9 besonders vorteilhaft, da z.B. Kratzspuren am Werkteil 9, die bei einer Schüttgutaufnahme entstehen können, vermieden werden.

Weiter sei noch darauf hingewiesen, dass anstelle der gezeigten Rutsche 53 und des Teileträgers 20 die vom Fördermittel 26 abtransportierten Werkteile 9 auf eine nicht weiter dargestellte Fördereinrichtung für einen Weitertransport zu entfernteren Sammelvorrichtung übergeben werden können.

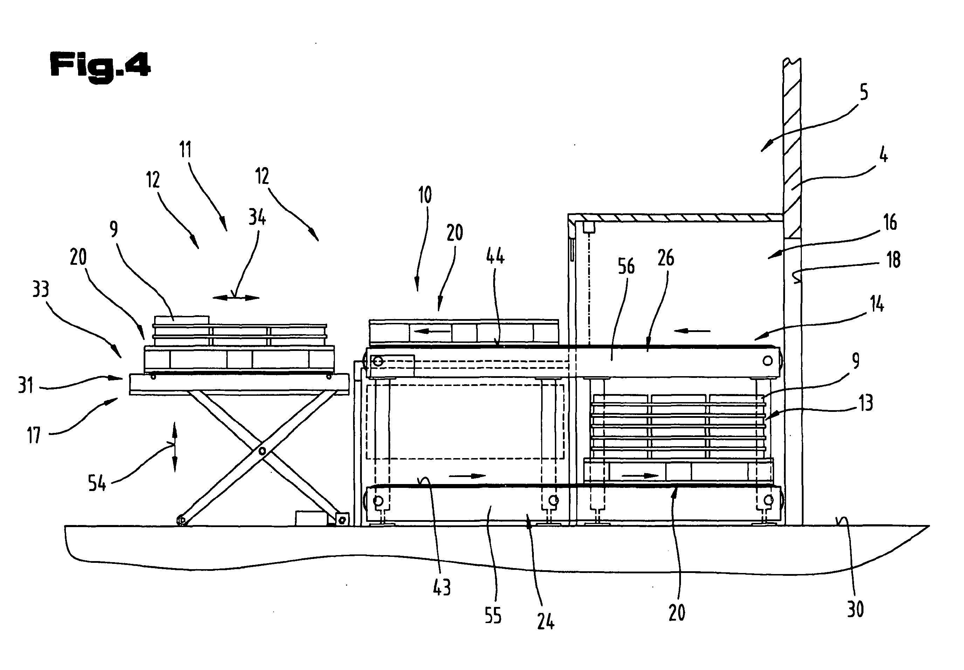

In der Fig. 4 ist eine andere Ausbildung der Werkteil-Transfereinrichtung 12 mit der über die Ein- und Ausgangsschleuse 18 des Schutzzaunes 4 bedienbare, zweietagig ausgebildete Fördereinrichtung 16 und der im Anschluss daran unmittelbar angeordneten, in zu der Aufstandsfläche 30 senkrechten Richtung - gemäß Doppelpfeil 54 - verstellbaren Stelleinrichtung 17, die gebildet ist durch den Hubtisch 31 mit den auf diesen angeordneten Förderer 33.

Nach dieser Ausbildung erfolgt die Zufuhr von zur Verarbeitung vorgesehener Werkteile 9 in die Biegezelle 5 über nicht weiter gezeigte Transportmaßnahmen, z.B. einen Palettenförderer, Behälterförderer oder manuell mittels Gabelhubwagen auf einen Bereitstellplatz von dem die Werkteile 9 mittels der Handhabungsvorrichtung aufgenommen werden.

Mittels der Werkteil- Transfereinrichtung 12 werden leere Teileträger 20 über den Förderweg 14 zur Bereitstellposition 10 gefördert und zur Befüllung auf den Förderer 33 des Hubtisches 31 als Abgabeposition 11 übernommen von der ein Abtransport des befüllten Teileträgers 20 über den Förderweg 13 aus der Fertigungszelle 5 erfolgt.

Die Fördereinrichtung 16 wird nach diesem gezeigten Ausführungsbeispiel durch einen unmittelbar auf der Aufstandsfläche 30 befestigten Palettenförderer 55 für den Abtransport der mit bearbeiteten Werkteilen 9 befüllten Teileträger 20, im gezeigten Ausführungsbeispiel eine Palette mit lageweise gestapelten Werkteilen 9.

Selbstverständlich sind weitere Ausbildungsarten der Teileträger 20, zum Beispiel Paletten mit Aufsatzrahmen, Behälter, Tablare, etc. möglich.

Der Palettenförderer 55 ist bevorzugt als Mehrspurband- oder Rollenförderer ausgebildet, der es ermöglicht, einen Teileträger 20, der im befüllten Zustand in der Fertigungszelle 5 unmittelbar vor der Ein- und Ausgangsschleuse 18 im bereitgestellt ist, mittels eines zufahrbaren, nicht weiter dargestellten Gabelstapler aufgenommen und abtransportiert werden kann. Der Palettenförderer 55 bildet dabei ein gegenüber der Aufstandsfläche 30 nur in geringem Abstand darüber die Förderebene 43 des ersten Förderweges 13 aus.

Über dem Palettenförderer 55 und mit einer entsprechenden Durchfahrtshöhe ist ein, den zweiten Förderweg 14 mit der Förderebene 44 ausbildend, das Fördermittel 26, bevorzugt ein Bandförderer 56, für den Transport und der Bereitstellung leerer Teileträger 20, zum Beispiel Paletten, in der Biegezelle 5 und für die Übernahme durch den Förderer 33 der Stelleinrichtung 17, insbesondere des Hubtisches 31, angeordnet.

Die Übernahme auf den Hubtisch 31 erfolgt einerseits über den Antrieb und Betrieb des Bandförderers 56 bei gleichzeitigen Betrieb des Förderers 33, der bevorzugt durch einen Rollenförderer mit reversiblen Antrieb für eine wechselnde Förderrichtung - gemäß Doppelpfeil 34 - gebildet ist.

Es wird weiter darauf hingewiesen, dass selbstverständlich der Palettenförderer 55 sowie der die zweite Förderebene 14 ausbildende Bandförderer 56 mit von der Förderrichtung reversibel betreibbaren Antrieben für eine bedarfsweise umkehrbare Durchlaufrichtung der Teileträger 20, sowohl im leeren als auch im befüllten Zustand, versehen sein können, wodurch die Werkteil- Transfereinrichtung 12 sehr universell einsetzbar ist.

Im gezeigten Ausführungsbeispiel ist eine Länge der Fördereinrichtung 16 z.B. auf eine zweifache Länge der Teileträger 20 ausgelegt, wodurch zusätzlicher Speicherplatz für leere wie befüllte Teileträger 20 erreicht wird. Bei geringerem Durchsatzvolumen kann beispielweise auch nur jeweils ein Speicherplatz und damit eine geringere Länge der Fördereinrichtung ausreichend sein.

Die Ausführungsbeispiele zeigen mögliche Ausführungsvarianten der Fertigungszelle und der Teile- Transfereinrichtung.

Der Ordnung halber sei abschließend darauf hingewiesen, dass zum besseren Verständnis des Aufbaus der Fertigungszelle 5 und der Teile- Transfereinrichtung diese bzw. deren Bestandteile teilweise unmaßstäblich und/oder vergrößert und/oder verkleinert dargestellt wurden.

### Bezugszeichenaufstellung

- 1: Fertigungseinrichtung
- 2: Handhabungseinrichtung
- 3: Mehrachsroboter
- 4: Schutzzaun
- 5: Fertigungszelle

- 6: Sicherheitseinrichtung
- 7: Tür
- 8: Biegepresse
- 9: Werkteil
- 10: Bereitstellposition

- 11: Abgabeposition
- 12: Werkteil-Transfereinrichtung
- 13: Förderweg
- 14: Förderweg
- 15: Seitenwand

- 16: Fördereinrichtung
- 17: Stelleinrichtung
- 18: Ein- und Ausgangsschleuse
- 19: Querseitenwand
- 20: Teileträger

- 21: Palette
- 22: Förderstation
- 23: Förderstation
- 24: Fördermittel
- 25: Fördermittel

- 26: Fördermittel
- 27: Fördermittel
- 28: Antriebsmittel
- 29: Förderlänge
- 30: Aufstandsfläche

- 31: Hubtisch
- 32: Lift
- 33: Förderer
- 34: Doppelpfeil
- 35: Antriebsmittel

- 36: Trenn- und Deckelelement
- 37: Förderhöhe
- 38: Aufsatzrahmen
- 39: Hubsteuerung
- 40: Steuereinrichtung

- 41: Förderebene
- 42: Doppelpfeil
- 43: Förderebene
- 44: Förderebene
- 45: Steuer- und Erfassungsmittel

- 46: Lichtschranke
- 47: Näherungssensor
- 48:
- 49:
- 50: Entnahmeschacht

- 51: Greifeinrichtung
- 52: Förderband
- 53: Rutsche
- 54: Pfeil
- 55: Palettenförderer

- 56: Bandförderer

## Patentansprüche

1. Fertigungszelle (5) für eine automatisierte Bearbeitung von Werkteilen (9), mit einem Schutzzaun (4) und darin angeordnet zumindest eine Fertigungseinrichtung (1), z.B. eine Biegepresse (8), und zumindest eine Handhabungsvorrichtung (2), und eine Bereitstellposition (10) und eine Abgabeposition (11) für die Werkteile (9) bzw. Teileträger (20), sowie eine die Bereitstellposition (10) und die Abgabeposition (11) ausbildende Werkteil-Transfereinrichtung (12) für die Werkteile (9) bzw. Teileträger (20), wobei die Werkteil-Transfereinrichtung (12) eine Fördereinrichtung (16) umfasst, die einen ersten Förderweg (13) und einen parallel dazu verlaufenden zweiten Förderweg (14) ausbildet, wobei der erste Förderweg (13) und der zweite Förderweg (14) übereinander verlaufen und zu einer Aufstandsfläche parallel verlaufende und einander zumindest bereichsweise überdeckende Förderebenen (43, 44) bilden, und die Werkteil-Transfereinrichtung (12) einen auf einer Stelleinrichtung (17) in Form eines Hubtisches (31) oder Liftes (32) angeordneten Förderer (33) für einen wahlweisen Transfer eines Teileträgers (20) zwischen den Förderwegen (13, 14) aufweist, **dadurch gekennzeichnet, dass** die Stelleinrichtung (17) mit der durch den Förderer (33) gebildeten Förderebene (41) über eine Hubsteuerung (39) einer die gesamte Werkteil-Transfereinrichtung (12) steuernden, übergeordneten Steuereinrichtung (40) stufenlos zwischen der ersten und der zweiten Förderebene (43, 44) der Förderwege (13, 14) in vorgebbaren Höhenlagen verstellbar ist

2. Fertigungszelle nach Anspruch 1, **dadurch gekennzeichnet, dass** der Förderer (33) bevorzugt durch einen Rollenförderer, gebildet ist.

3. Fertigungszelle nach Anspruch 1 oder 2, **dadurch gekennzeichnet, dass** der erste und der zweite Förderweg (13, 14) der Fördereinrichtung (16) jeweils durch ein Fördermittel (24,26) gebildet ist.

4. Fertigungszelle nach Anspruch 3, **dadurch gekennzeichnet, dass** das erste Fördermittel (24) durch einen Palettenförderer (55), bevorzugt einen Mehrspur- Rollenförderer gebildet ist.

5. Fertigungszelle nach Anspruch 3, **dadurch gekennzeichnet, dass** das zweite Fördermittel (26) durch einen Bandförderer (56) gebildet ist.

6. Fertigungszelle nach Anspruch 1, **dadurch gekennzeichnet, dass** der erste und der zweite Förderweg (13, 14) der Fördereinrichtung (16) jeweils durch zwei unmittelbar in einer Förderrichtung aneinander grenzende Fördermittel (24, 25, 26, 27) gebildet sind.

7. Fertigungszelle nach Anspruch 6, **dadurch gekennzeichnet, dass** die Fördermittel (24, 25, 26, 27) durch Bandförderer gebildet sind.

8. Fertigungszelle nach Anspruch 1, **dadurch gekennzeichnet, dass** die Fördermittel (24, 25, 26, 27) des ersten und des zweiten Förderweges (13,14) jeweils zwei aneinander grenzende Förderstationen (22, 23) ausbilden.

9. Fertigungszelle nach Anspruch 8, **dadurch gekennzeichnet, dass** die Fördermittel (24, 25, 26, 27) durch Staurollen- oder Staubandförderer gebildet sind.

10. Fertigungszelle nach Anspruch 8 oder 9, **dadurch gekennzeichnet, dass** die Fördermittel (24, 25, 26, 27) jeweils mit einem Antriebsmittel (28) versehen sind.

11. Fertigungszelle nach Anspruch 10, **dadurch gekennzeichnet, dass** das Antriebsmittel (28) durch einen Elektromotor gebildet ist.

12. Fertigungszelle nach Anspruch 1, **dadurch gekennzeichnet, dass** zumindest bereichsweise, bevorzugt im Bereich der Ein- und Ausgangsschleuse (18), die Werkteil- Transfereinrichtung (12) tunnelartig durch Trenn- und Deckelemente (36) abgegrenzt ist.

13. Fertigungszelle nach Anspruch 12, **dadurch gekennzeichnet, dass** die Trenn- und Deckelemente (36) zumindest bereichsweise transparent ausgebildet sind.

14. Fertigungszelle nach Anspruch 1, **dadurch gekennzeichnet, dass** eine Förderlänge (29) der je Förderweg (13, 14) angeordneten Fördermittel (24, 25, 26, 27) zumindest einer zweifachen Länge des Teileträgers (20) entspricht.

15. Fertigungszelle nach Anspruch 1, **dadurch gekennzeichnet, dass** eine freie Förderhöhe (37) der Förderwege (13, 14) zumindest größer ist als eine Gesamthöhe eines mit einem Aufsatzrahmen (38) versehenen Teileträgers (20).

16. Fertigungszelle nach Anspruch 1, **dadurch gekennzeichnet, dass** zur Überwachung und Steuerung der Werkteil- Transfereinrichtung (12) längs den Förderwegen (13, 14), bevorzugt im Bereich der Ein- und Ausgangsschleuse (18) und/oder zwischen den Förderstationen (22, 23) und/oder zwischen diesen und der Stelleinrichtung (17) mit dem Förderer (33) Steuer- und Erfassungsmittel (45) angeordnet sind.

17. Fertigungszelle nach Anspruch 16, **dadurch gekennzeichnet, dass** die Steuer- und Erfassungsmittel (45) bevorzugt durch mit einer Steuereinrichtung (40) kommunikationsverbundene Lichtschrankenanordnungen (46) gebildet sind.

18. Fertigungszelle nach Anspruch 16, **dadurch gekennzeichnet, dass** die Steuer- und Erfassungsmittel (45) bevorzugt durch mit der Steuereinrichtung (40) kommunikationsverbundene Näherungssensoren (47) gebildet sind.

## Claims

1. Production cell (5) for the automated processing of workpieces (9) with a protective fence (4) and arranged therein at least one production device (1), e.g. a bending press (8), and at least one handling device (2) and one readiness position (10) and a discharge position (11) for the workpieces (9) or parts carrier (20), and a workpiece transfer device (12) forming the readiness position (10) and the discharge position (11) for the workpieces (9) or parts carrier (20), the workpiece transfer device (12) having a conveyor device (16) which forms a first conveying path (13) and a second conveying path (14) running parallel thereto, and the first conveying path (13) and the second conveying path (14) run above one another and form conveying planes (43, 44) running parallel to a standing surface and overlapping one another at least partly and the workpiece transfer device (12) has a conveyor (33) arranged on an adjusting device (17) in the form of a lifting table (31) or lift (32) for the optional transfer of a parts carrier (20) between the conveying paths (13, 14), **characterized in that** the adjusting device (17) with the conveying plane (41) formed by the conveyor (33) can be adjusted by a lift control (39) of a superordinate control device (40) controlling the entire workpiece transfer device (12) without graduation between the first and the second conveying plane (43, 44) of the conveying path (13, 14) at predefinable height levels.

2. Production cell according to claim 1, **characterized in that** the conveyor (33) is preferably formed by a roller conveyor.

3. Production cell according to claim 1 or 2, **characterized in that** the first and second conveying path (13, 14) of the conveying device (16) are each formed by a conveying means (24, 26).

4. Production cell according to claim 3, **characterized in that** the first conveying means (24) is formed by a pallet conveyor (55), preferably a multi-track roller conveyor.

5. Production cell according to claim 3, **characterized in that** the second conveying means (26) is formed by a belt conveyor (56).

6. Production cell according to claim 1, **characterized in that** the first and the second conveying path (13, 14) of the conveying device (16) are each formed by two conveying means (24, 25, 26, 27) adjoining one another directly in a conveying direction.

7. Production cell according to claim 6, **characterized in that** the conveying means (24, 25, 26, 27) are formed by belt conveyors.

8. Production cell according to claim 1, **characterized in that** each of the conveying means (24, 25, 26, 27) of the first and second conveying path (13, 14) forms two adjoining conveying stations (22, 23).

9. Production cell according to claim 8, **characterized in that** the conveying means (24, 25, 26, 27) are formed by accumulation rollers or accumulation conveyors.

10. Production cell according to claim 8 or 9, **characterized in that** each of the conveying means (24, 25, 26, 27) is provided with a drive means (28).

11. Production cell according to claim 10, **characterized in that** the drive means (28) is formed by an electric motor.

12. Production cell according to claim 1, **characterized in that** at least partly, preferably in the area of the input and output lock (18), the workpiece transfer device (12) is delimited tunnel-like by separating and cover elements (36).

13. Production cell according to claim 12, **characterized in that** at least sections of the separating and cover elements (36) are transparent.

14. Production cell according to claim 1, **characterized in that** a conveying distance (29) of the conveying means (24, 25, 26, 27) arranged per conveying path (13, 14) corresponds at least to a double length of the parts carrier (20).

15. Production cell according to claim 1, **characterized in that** a free conveying height (37) of the conveying paths (13, 14) is at least greater than the total height of a parts carrier (20) provided with an attachment frame (38).

16. Production cell according to claim 1, **characterized in that** control and detecting means (45) are arranged for monitoring and controlling the workpiece transfer device (12) along the conveying paths (13, 14), preferably in the area of the input and output lock (18) and/or between the conveying stations (22, 23) and/or between the latter and the adjusting device (17) with the conveyor (33).

17. Production cell according to claim 16, **characterized in that** the control and detecting means (45) are preferably formed by light barrier arrangements (46) communication-connected to a control device (40).

18. Production cell according to claim 16, **characterized in that** the control and detecting means (45) are preferably formed by proximity sensors (47) communication-connected to the control device (40).

## Revendications

1. Cellule de production (5) pour un usinage automatique de pièces (9), avec une clôture de protection (4) et, disposés à l'intérieur, au moins un dispositif de fabrication (1), par exemple une presse plieuse (8), et au moins un dispositif de manipulation (2), et une position d'attente (10) et une position de remise (11) pour les pièces (9) ou les porte-pièces (20), ainsi qu'un dispositif de transfert de pièces (12) comportant une position d'attente (10) et une position de remise (11), pour les pièces (9) ou les porte-pièces (20), le dispositif de transfert de pièces (12) comprenant un dispositif de convoyage (16), qui comporte un premier trajet de convoyage (13) et un deuxième trajet de convoyage (14) parallèle à celui-ci, le premier trajet de convoyage (13) et le deuxième trajet de convoyage (14) étant superposés et formant des plans de convoyage (43, 44) s'étendant parallèlement à une surface de contact et se chevauchant au moins partiellement, et le dispositif de transfert de pièces (12) comprend un convoyeur (33) disposé sur un dispositif de réglage (17) sous la forme d'une table de levage (31) ou d'un monte-charge (32), pour un transfert sélectif d'un porte-pièce (20) entre les trajets de convoyage (13, 14), **caractérisée en ce que** le dispositif de réglage (17) est réglable, avec le plan de convoyage (41) formé par le convoyeur (33), par l'intermédiaire d'une commande de levage (39) d'un dispositif de commande (40) supérieur contrôlant l'ensemble du dispositif de transfert de pièces (12), de manière progressive entre le premier et le deuxième plan de convoyage (43, 44) des trajets de convoyage (13, 14) à des positions en hauteur prédéterminées.

2. Cellule de fabrication selon la revendication 1, **caractérisée en ce que** le convoyeur (33) est constitué de préférence d'un convoyeur à rouleaux.

3. Cellule de fabrication selon la revendication 1 ou 2, **caractérisée en ce que** le premier et le deuxième trajet de convoyage (13, 14) du dispositif de convoyage (16) sont constitués chacun d'un moyen de convoyage (24, 26).

4. Cellule de fabrication selon la revendication 3, **caractérisée en ce que** des premiers moyens de convoyage (24) sont constitués d'un convoyeur de palettes (55), de préférence d'un convoyeur à rouleaux multivoie.

5. Cellule de fabrication selon la revendication 3, **caractérisée en ce que** des deuxièmes moyens de convoyage (26) sont constitués d'un convoyeur à bande (56).

6. Cellule de fabrication selon la revendication 1, **caractérisée en ce que** le premier et le deuxième trajet de convoyage (13, 14) du dispositif de convoyage (16) sont constitués chacun de deux moyens de convoyage (24, 25, 26, 27) directement adjacents entre eux dans une direction de convoyage.

7. Cellule de fabrication selon la revendication 6, **caractérisée en ce que** les moyens de convoyage (24, 25, 26, 27) sont constitués de convoyeurs à bandes.

8. Cellule de fabrication selon la revendication 1, **caractérisée en ce que** les moyens de convoyage (24, 25, 26, 27) du premier et du deuxième trajet de convoyage (13, 14) forment chacun deux stations de convoyage (22, 23) adjacentes entre elles.

9. Cellule de fabrication selon la revendication 8, **caractérisée en ce que** les moyens de convoyage (24, 25, 26, 27) sont constitués de convoyeurs à rouleaux d'accumulation ou de convoyeurs à bandes d'accumulation.

10. Cellule de fabrication selon la revendication 8 ou 9, **caractérisée en ce que** les moyens de convoyage (24, 25, 26, 27) sont équipés chacun d'un moyen d'entraînement (28).

11. Cellule de fabrication selon la revendication 10, **caractérisée en ce que** le moyen d'entraînement (28) est constitué d'un moteur électrique.

12. Cellule de fabrication selon la revendication 1, **caractérisée en ce que**, au moins partiellement, de préférence au niveau du sas d'entrée et de sortie (18), le dispositif de transfert de pièces (12) est délimité sous une forme de tunnel par des éléments de séparation et de recouvrement (36).

13. Cellule de fabrication selon la revendication 12, **caractérisée en ce que** les éléments de séparation et de recouvrement (36) sont au moins partiellement transparents.

14. Cellule de fabrication selon la revendication 1, **caractérisée en ce qu'**une longueur de convoyage (29) des moyens de convoyage (24, 25, 26, 27) disposés pour chaque trajet de convoyage (13, 14) correspond au moins à deux fois la longueur du porte-pièce (20).

15. Cellule de fabrication selon la revendication 1, **caractérisée en ce qu'**une hauteur de convoyage libre (37) des trajets de convoyage (13, 14) est au moins supérieure à une hauteur totale d'un porte-pièce (20) muni d'un châssis rapporté (38).

16. Cellule de fabrication selon la revendication 1, **caractérisée en ce que**, pour la surveillance et le contrôle du dispositif de transfert de pièce (12), le long des trajets de convoyage (13, 14), de préférence au niveau du sas d'entrée et de sortie (18) et/ou entre les stations de convoyage (22, 23) et/ou entre celles-ci et le dispositif de réglage (17), avec le convoyeur (33), sont disposés des moyens de contrôle et de mesure (45).

17. Cellule de fabrication selon la revendication 16, **caractérisée en ce que** les moyens de contrôle et de mesure (45) sont constitués de préférence de dispositifs de barrières immatérielles (46) communiquant avec un dispositif de commande (40).

18. Cellule de fabrication selon la revendication 16, **caractérisée en ce que** les moyens de contrôle et de mesure (45) sont constitués de préférence par des capteurs de proximité (47) communiquant avec le dispositif de commande (40).
